(19) Europäisches Patentamt
European Patent Office
Office européen des brevets

(11) **EP 2 225 885 B1**

(12) **EUROPEAN PATENT SPECIFICATION**

(45) Date of publication and mention
of the grant of the patent:
**23.03.2016  Bulletin 2016/12**

(51) Int Cl.:
***H04N 7/24*** (2006.01)

(21) Application number: **07868057.6**

(22) Date of filing: **27.12.2007**

(86) International application number:
**PCT/US2007/026378**

(87) International publication number:
**WO 2009/085031 (09.07.2009 Gazette 2009/28)**

(54) **METHOD AND SYSTEM FOR SYNCHRONIZED BREAKPOINT CALCULATION**

VERFAHREN UND SYSTEM ZUR SYNCHRONISIERTEN BREAKPOINT-BERECHNUNG

PROCÉDÉ ET SYSTÈME POUR UN CALCUL DE POINT D'ARRÊT SYNCHRONISÉ

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**08.09.2010  Bulletin 2010/36**

(73) Proprietor: **Thomson Licensing**
**92130 Issy-les-Moulineaux (FR)**

(72) Inventor: **BALL, Keith**
**San Jose**
**California 95124 (US)**

(74) Representative: **Thies, Stephan et al**
**Deutsche Thomson OHG**
**European Patent Operations**
**Karl-Wiechert-Allee 74**
**30625 Hannover (DE)**

(56) References cited:
**WO-A-2005/086865      FR-A- 2 810 834**
**US-A1- 2002 056 107    US-A1- 2003 236 843**
**US-A1- 2007 282 898    US-B1- 6 704 930**

**Description**

**FIELD OF THE INVENTION**

The present invention generally relates to end system (e.g., display) control and programming and, more particularly, to a method and system for providing playlist based synchronized breakpoint calculation.

**BACKGROUND OF THE INVENTION**

Information and content distribution systems are used to provide information and content to a plurality of end systems. Such systems are constantly evolving and the demand for improved performance is continually on the rise. For example, in video-on-demand applications media content has been made available to and utilized by satellite/cable television subscribers. Typically, subscribes can view at their television via a set-top box the video programs available for selection (sometimes for an additional fee) and upon selection made at the subscriber's set-top-box (STB), the program is sent from the program center to the set-top-box via the cable or satellite network. On occasion, in such video-on-demand systems, a single channel is communicated to all subscriber set-top boxes.

Similarly, in the advertising realm, providing in-store retail media content is becoming the most popular advertising medium in use today, with broadcast distribution being its primary means of content presentation. That is, in recent years retailers and the managers of public spaces have brought in video display systems for advertising use. In such systems, content is distributed by a server and received at a respective receiver, such as a set-top-box for each display or group of displays and a speaker for audio systems, typically in the form of playlists. Retailers use the displays and audio systems to present their current offerings or sale information in the form of respective playlists for each of the channels or groups of channels, while the public spaces sell time on the video displays to advertisers either national or local, knowing that large numbers of consumers will see the presentation.

In various content distribution systems as those described above, the playlists include programming for a single channel (e.g., a break-in/headline channel) to be communicated to all receivers at determined time periods for the purposes of communicating a synchronized message across all available channels. In such systems, switching receivers or displays at the correct time to a single common channel (e.g., a break-in channel) provides a powerful tool for distribution and a powerful messaging medium for advertising. That is the advertising message is more effectively communicated with a synchronized approach where receivers, such as screens and speakers in an advertising environment, such as a store, can alternately show headline programming (in sync with all other screens and speakers) and department or local channel level programming. At appropriate points in the playlists, the receivers or displays must be able to alternate between headline programming and individual department/local channel programming. However, traditional store-wide and department TV channels are not as effective as desired. There are drawbacks to the currently available models for switching receivers to a single common channel. More specifically, in such applications, the effectiveness of the switch is diminished if the switching occurs at the wrong time, for example, in the middle of an advertisement. More specifically, if multiple channels are involved then the end point will not be at one point in time for all channels. This would result in one or more channels being cut off at the switching point. That is, current channel switching approaches are unable to support seamless transitions between alternating department/local channel and headline programming.

**SUMMARY OF THE INVENTION**

Embodiments of the present invention address the deficiencies of the prior art by providing a method and system for playlist based synchronized breakpoint calculation.

In one embodiment of the present invention, a method for determining a synchronized breakpoint for playlists includes determining a break interval duration using a defined break frequency, determining, using the determined break interval duration and break in content to be presented during the break interval duration, an ideal duration interval for content of individual channels to be presented, compiling respective content portions of the individual channels to cause the respective playlists of the individual channels to attempt to equal the ideal duration interval, and selecting as a breakpoint for the respective playlists of the individual channels, at least one of an endpoint of the ideal duration interval and an endpoint of the playlist of an individual channel, whichever results in a least amount of filler content required to synchronize the respective endpoints of the individual channels to the selected breakpoint. The method can further include adding filler content to the respective playlists of the individual channels as needed to cause the respective playlists of the individual channels to end at the selected breakpoint.

In an alternate embodiment of the present invention, a system for determining a synchronized breakpoint for playlists includes at least one content source for providing individual channel content, filler content and at least one break-in channel content and a controller including a memory for storing at least information regarding the individual channel content, filler content, break-in channel content and program instructions, and a processor for executing the program instructions. In one embodiment of the present invention, the controller is adapted to perform the steps of determining a break interval duration using a defined break frequency, determining, using the determined break interval duration and break in content to be presented during the break interval duration, an ideal duration interval for content of individual channels to be presented, compiling respective content portions of the individual channels to cause the respective playlists of the individual channels to attempt to equal the ideal duration interval, and selecting as a breakpoint for the respective playlists of the individual channels, at least one of an endpoint of the ideal duration interval and an endpoint of the playlist of an individual channel, whichever results in a least amount of filler content required to synchronize the respective endpoints of the individual channels to the selected breakpoint.

## BRIEF DESCRIPTION OF THE DRAWINGS

The teachings of the present invention can be readily understood by considering the following detailed description in conjunction with the accompanying drawings, in which:

FIG. 1 depicts a high level block diagram of a content distribution system in which an embodiment of the present invention can be applied;
FIG. 2 depicts a high level block diagram of an in-store advertising network for providing in-store advertising in accordance with an embodiment of the present invention;
FIG. 3 depicts a flow diagram of a method for determining an optimal break point for the transition from respective individual channels to a break-in channel in accordance with an embodiment of the present invention;
FIG. 4 depicts a flow diagram of a method for determining an optimized accumulated duration for individual channels suitable for use in the method of FIG. 3; and
FIG. 5 depicts tables of individual channel playlist and break-in channel playlist definitions for describing an example of a method for determining an optimal break point for the transition from respective individual channels to a break-in channel in accordance with an embodiment of the present invention.

It should be understood that the drawings are for purposes of illustrating the concepts of the invention and are not necessarily the only possible configuration for illustrating the invention. To facilitate understanding, identical reference numerals have been used, where possible, to designate identical elements that are common to the figures.

## DETAILED DESCRIPTION OF THE INVENTION

The present invention advantageously provides a method and system for playlist based synchronized breakpoint calculation. Although the present invention will be described primarily within the context of a retail advertising network environment and control and programming of displays, the specific embodiments of the present invention should not be treated as limiting the scope of the invention. It will be appreciated by those skilled in the art and informed by the teachings of the present invention that the concepts of the present invention can be advantageously applied in substantially any content distribution and playback network such as a video on demand network and the like for the control of other end systems such as displays, speakers and the like.

The functions of the various elements shown in the figures can be provided through the use of dedicated hardware as well as hardware capable of executing software in association with appropriate software. When provided by a processor, the functions can be provided by a single dedicated processor, by a single shared processor, or by a plurality of individual processors, some of which can be shared. Moreover, explicit use of the term "processor" or "controller" should not be construed to refer exclusively to hardware capable of executing software, and can implicitly include, without limitation, digital signal processor ("DSP") hardware, read-only memory ("ROM") for storing software, random access memory ("RAM"), and non-volatile storage. Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future (i.e., any elements developed that perform the same function, regardless of structure).

Thus, for example, it will be appreciated by those skilled in the art that the block diagrams presented herein represent conceptual views of illustrative system components and/or circuitry embodying the principles of the invention. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

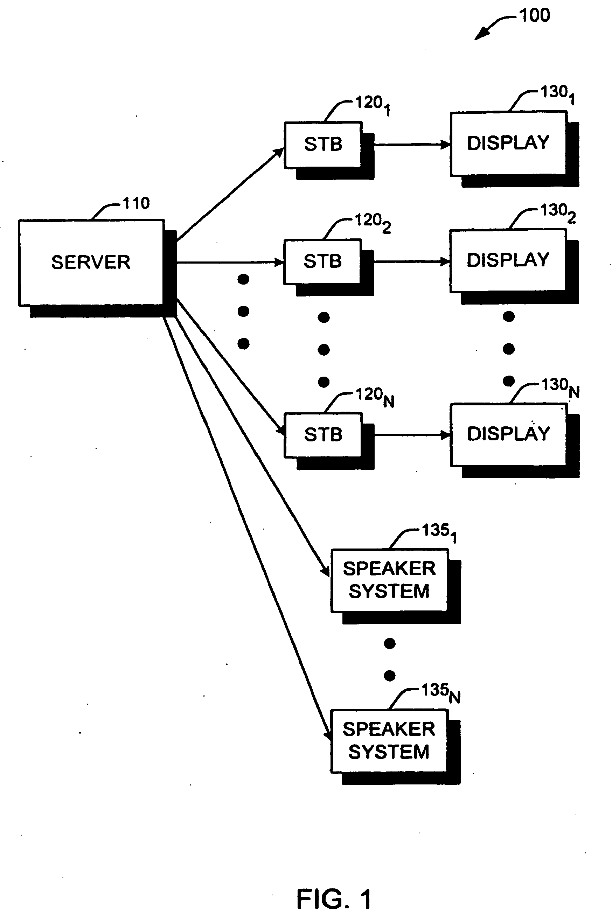

FIG. 1 depicts a high level block diagram of a content distribution system in which an embodiment of the present invention can be applied. The content distribution system 100 of FIG. 1 illustratively comprises at least one server 110, a plurality of receiving devices such as tuning/decoding means (illustratively set-top boxes (STBs)) $120_1$-$120_n$, and a

respective display $130_1$-$130_n$ for each of the set-top boxes $120_1$-$120_n$, and other receiving devices, such as audio output devices (illustratively speaker systems) $135_1$-$135_n$. Although in the system 100 of FIG. 1, each of the plurality of set-top boxes $120_1$-$120_n$, is illustratively connected to a single, respective display, in alternate embodiments of the present invention, each of the plurality of set-top boxes $120_1$-$120_n$, can be connected to more than a single display. In addition, although in the content distribution system 100 of FIG. 1 the tuning/decoding means are illustratively depicted as set-top boxes 120, in alternate embodiments of the present invention, the tuning/decoding means of the present invention can comprise alternate tuning/decoding means such as a tuning/decoding circuit integrated into the displays 130 or other stand alone tuning/decoding devices and the like. Even further, receiving devices of the present invention can include any devices capable of receiving content such as audio, video and/or audio/video content.

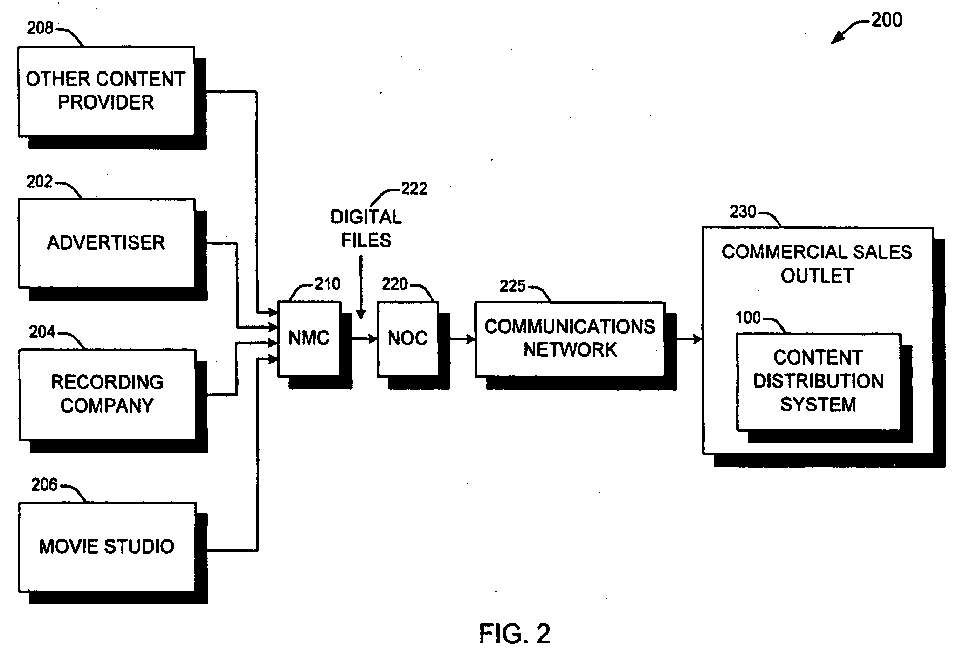

In one embodiment of the present invention, the content distribution system 100 of FIG. 1 can be a part of an in-store advertising network. For example, FIG. 2 depicts a high level block diagram of an in-store advertising network 200 for providing in-store advertising. In the advertising network 200 of FIG. 2, the advertising network 200 and distribution system 100 employ a combination of software and hardware that provides cataloging, distribution, presentation, and usage tracking of music recordings, home video, product demonstrations, advertising content, and other such content, along with entertainment content, news, and similar consumer informational content in an in-store setting. The content can include content presented in compressed or uncompressed video and audio stream format (e.g., MPEG4/MPEG4 Part 10/AVC-H.264, VC-1, Windows Media, etc.), although the present system should not be limited to using only those formats.

In one embodiment of the present invention, software for controlling the various elements of the in-store advertising network 200 and the content distribution system 100 can include a 32-bit operating system using a windowing environment (e.g., MS-Windows™ or X-Windows operating system) and high-performance computing hardware. The advertising network 200 can utilize a distributed architecture and provides centralized content management and distribution control via, in one embodiment, satellite (or other method, e.g., a wide-area network (WAN), the Internet, a series of microwave links, or a similar mechanism) and in-store modules.

As depicted in FIG. 2, the content for the in-store advertising network 200 and the content distribution system 100 can be provided from an advertiser 202, a recording company 204, a movie studio 206 or other content providers 208. An advertiser 202 can be a product manufacturer, a service provider, an advertising company representing a manufacturer or service provider, or other entity. Advertising content from the advertiser 202 can consist of audiovisual content including commercials, "info-mercials", product information and product demonstrations, and the like.

A recording company 204 can be a record label, music publisher, licensing/publishing entity (e.g., BMI or ASCAP), individual artist, or other such source of music-related content. The recording company 204 provides audiovisual content such as music clips (short segments of recorded music), music video clips, and the like. The movie studio 206 can be a movie studio, a film production company, a publicist, or other source related to the film industry. The movie studio 106 can provide movie clips, pre-recorded interviews with actors and actresses, movie reviews, "behind-the-scenes" presentations, and similar content.

The other content provider 208 can be any other provider of video, audio or audiovisual content that can be distributed and displayed via, for example, the content distribution system 100 of FIG. 1.

In one embodiment of the present invention, content is procured via the network management center 210 (NMC) using, for example, traditional recorded media (tapes, CD's, videos, and the like). Content provided to the NMC 210 is compiled into a form suitable for distribution to, for example, the local distribution system 100, which distributes and displays the content at a local site.

The NMC 210 can digitize the received content and provide it to a Network Operations Center (NOC) 220 in the form of digitized data files 222. It will be noted that data files 222, although referred to in terms of digitized content, can also be streaming audio, streaming video, or other such information. The content compiled and received by the NMC 210 can include commercials, bumpers, graphics, audio and the like. All files are preferably named so that they are uniquely identifiable. More specifically, the NMC 210 creates distribution packs that are targeted to specific sites, such as store locations, and delivered to one or more stores on a scheduled or on-demand basis. The distribution packs, if used, contain content that is intended to either replace or enhance existing content already present on-site (unless the site's system is being initialized for the first time, in which case the packages delivered will form the basis of the site's initial content). Alternatively, the files may be compressed and transferred separately, or a streaming compression program of some type employed.

The NOC 220 communicates digitized data files 222 to, in this example, the content distribution system 100 at a commercial sales outlet 230 via a communications network 225. The communications network 225 can be implemented in any one of several technologies. For example, in one embodiment of the present invention, a satellite link can be used to distribute digitized data files 222 to the content distribution system 100 of the commercial sales outlet 230. This enables content to easily be distributed by broadcasting (or multicasting) the content to various locations. Alternatively, the Internet can be used to both distribute audiovisual content to and allow feedback from commercial sales outlet 230. Other ways of implementing communications network 225, such as using leased lines, a microwave network, or other such mechanisms can also be used in accordance with alternate embodiments of the present invention.

The server 110 of the content distribution system 100 is capable of receiving content (e.g., distribution packs) and, accordingly, distribute them in-store to the various receivers such as the set-top boxes 120 and displays 130 and the speaker systems 135. That is in one embodiment of the present invention, at the content distribution system 100, content is received and configured for streaming. The streaming can be performed by one or more servers configured to act together or in concert. The streaming content can include content configured for various different locations or products throughout the sales outlet 230 (e.g., store). For example, respective set-top boxes 120 and displays 130 and various speaker systems 135 can be located at specific locations throughout the sales outlet 230 and respectively configured to display content and broadcast audio pertaining to products located within a predetermined distance from the location of each respective set-top box and display.

The server 110 of the content distribution system 100 receives content and creates various different streams (e.g., content channels) of audio, video and/or audio/video to be communicated to the various receivers throughout the store. The streams can be individual channels of modulated audio, video and/or audio/video onto a radio frequency distribution or transmitted as data flows within a unicast or multicast internet protocol (IP) network. These streams can originate from one or more servers under the same logical set of control software.

In various embodiments of the present invention, the various streams can be organized in the form of playlists to be communicated to the various receivers throughout the store and displayed on specific displays in a predetermined order and frequency. The various receivers can be organized into groups of channels receiving and performing the respective playlists. That is, to support the scheduling of media across a plurality of channels, the channels are organized into respective Channel Groups. The channel groups define respective sets of regular channels, such as department channels, that are simultaneously interrupted by a common channel such that all the associated receivers play the common (e.g., break-in) channel.

Various embodiments of the present invention are directed herein to take the playlists for the various regular/department (individual) channels and combine them with the playlist for a break-in channel to create a combined "channel group" playlist that has an optimized synchronization of the regular channels such that the playlist of the break-in channel is able to play at the same time across all of the individual channels at a time that, in one embodiment, maximizes available advertising time.

In a content distribution system, such as the content distribution system 100 of FIG. 1, each of the individual/department channels has a respective rundown. As such, break points are determined among all of the individual channels. Break points are defined on a timed interval that occurs at fixed time, but only allowed to occur at defined media boundaries. Therefore, in accordance with such embodiments of the present invention, filler content (e.g., media) is required at the break points to synchronize the individual channels to make sure that each channel's playlist will end at the same time. Such a playlist synchronization concept is taught in commonly owned, internationally filed patent applications entitled "Method, Apparatus and System for Improved Transition Between Alternating Individual and Common Channel Programming" (PCT/US2007/022602) (WO 2008097284) and "Method and System for Playlist Synchronization" (PCT/US2007/022617) (WO 2008097290), which are herein incorporated by reference in their entirety. More specifically, the above identified commonly owned, internationally filed patent applications teach means and processes for synchronizing individual channels using filler content to make sure that each channel's playlist will end at a common point in time.

In accordance with the concepts of the present invention, to enable a receiver/end system (e.g., display, speaker, etc.) to switch to play a break-in channel program then switch back to continue with its own, individual channel programming seamlessly, it is important to calculate a correct break point for each break. The calculation of the present invention can be determined or calculated at a remote server, such as the NMC 210 or the NOC 220, or at a local server such as the server 110 of the content distribution system 100 of FIG. 1. In addition, the synchronization of the present invention can be determined or calculated using a separate controller, similar to a general purpose computer or server, provided for performing the inventive concepts of the present invention. In various embodiments of the present invention, a controller or server contains information regarding a predetermined schedule (e.g., a rundown) and available individual channel content, break-in content and filler content for performing the various inventive aspects of the present invention. More specifically, in various embodiments of the present invention, a controller or server contains a memory including program instructions and stored information such as a rundown schedule for the respective individual channels and break-in channel(s), the lengths of available content portions (e.g., media clips) for each of the individual channels and break-in channel, desired break-in channel intervals and filler content available. A controller or server of the present invention can further include a processor for executing the control programs and using the stored information for performing the various inventive aspects of the present invention.

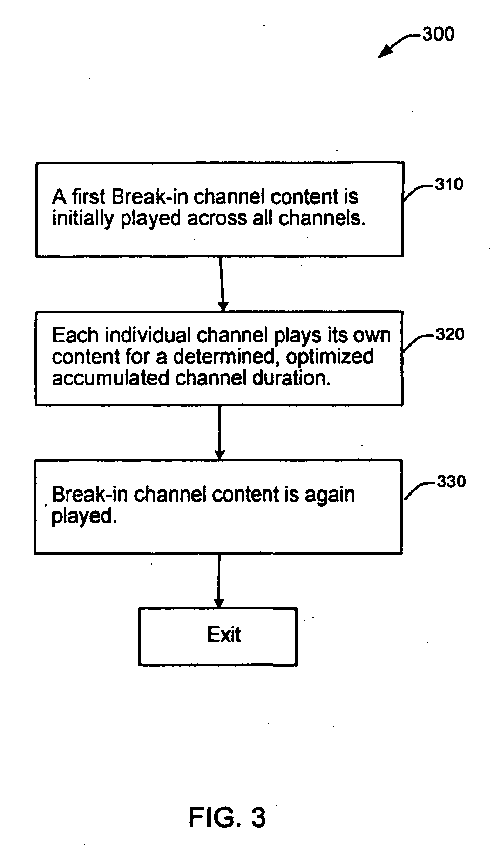

FIG. 3 depicts a flow diagram of a method for determining an optimal break point for the transition from respective individual channels to a break-in channel in accordance with an embodiment of the present invention. The method 300 begins in step 310 at which a first Break-in channel content is initially played across all channels. In the embodiment of the method 300 of FIG. 3, the break-in channel content is played one block at a time in between playing the regular channel content. The method then proceeds to step 320.

At step 320, after the first Break-in content is played across all channels, each individual channel plays its own content for a determined, optimized accumulated channel duration. The method 300 then proceeds to step 330.

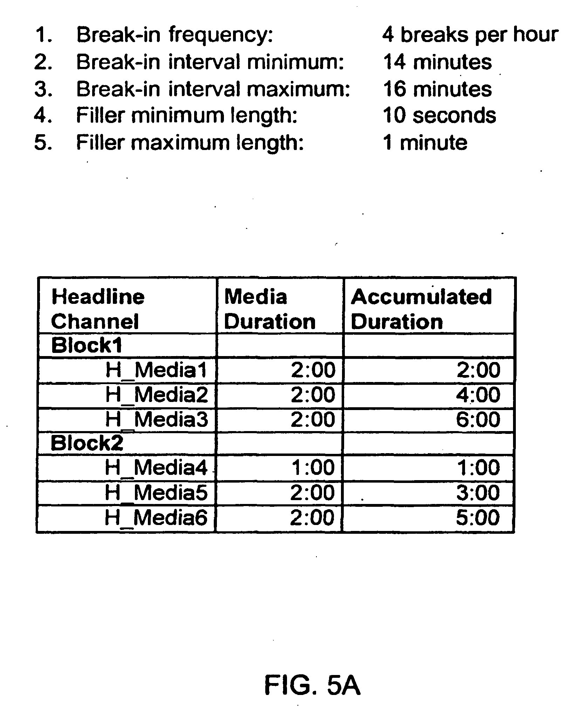

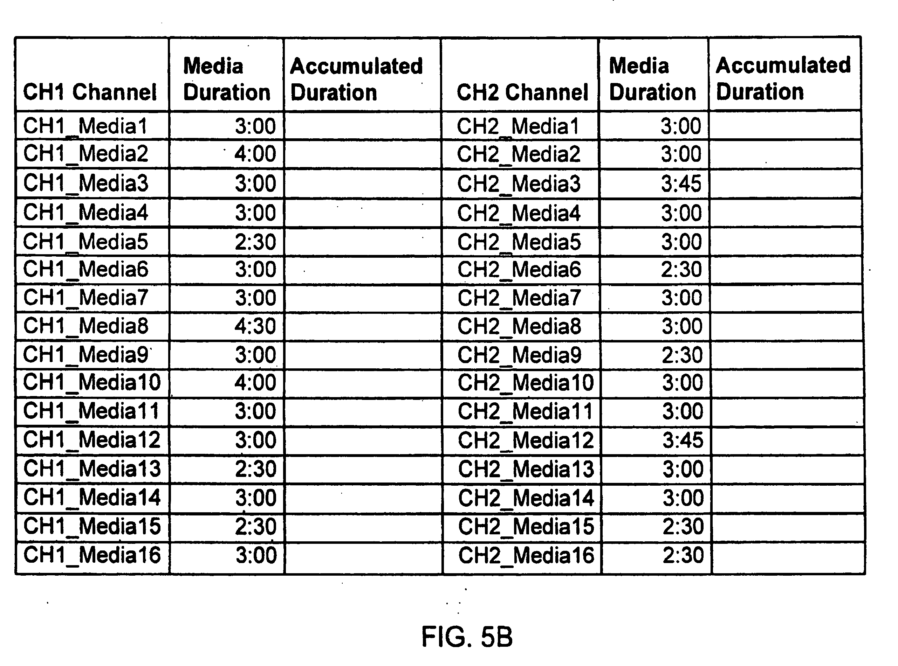

At step 330, the Break-in channel content is played again. The method 300 is repeated periodically throughout the duration of individual channel and local channel playlists according to a determined schedule as will be described in more detail with regards to the example of FIG. 5 described below.

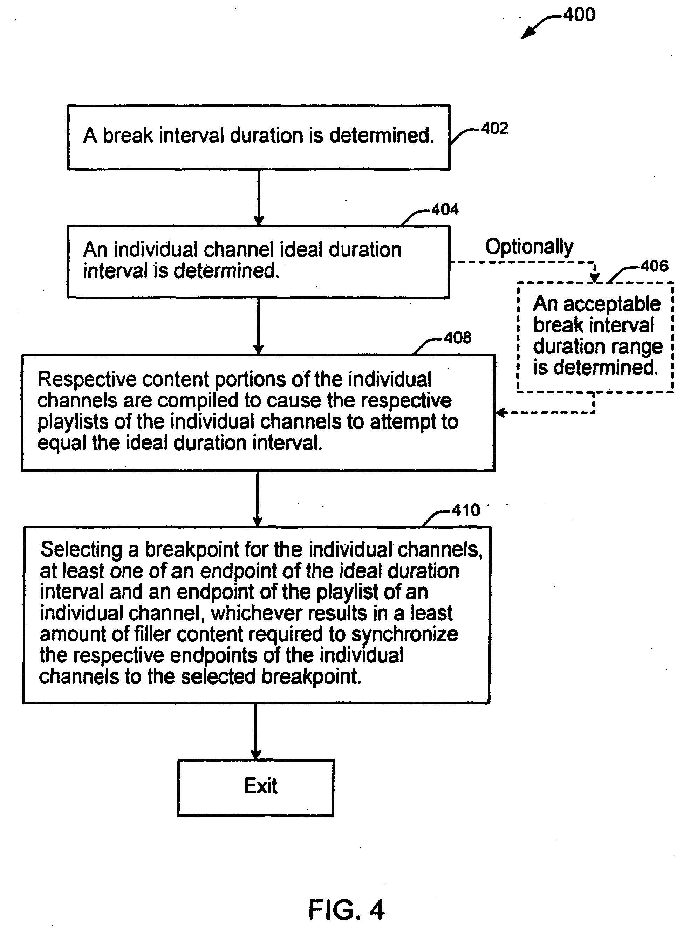

FIG. 4 depicts a flow diagram of a method for determining an optimized accumulated duration for individual channels suitable for use in step 320 of the method 300 of FIG. 3. The method 400 begins at step 402 during which a break interval duration is determined. That is, at step 402 a predetermined break frequency is used to determine a break interval duration. For example, if four (4) breaks per hour are predetermined, the break interval duration would be 15 minutes. The method 400 then proceeds to step 404.

At step 404, individual channel ideal duration interval is determined. For a first interval for playing individual channel content, the individual channel ideal duration can be determined according to equation one (1), which follows:

$$\text{<break-in channel interval duration> - <first break-in channel content duration>} \qquad (1)$$

For subsequent intervals for playing individual channel content, the individual channel ideal duration can be determined according to equation two (2), which follows:

$$(\text{<break-in channel interval duration> - <next break-in channel content duration>}) -$$
$$(\text{<previous actual channel duration> - <previous ideal channel duration>}) \qquad (2)$$

For equations 1 and 2, the previous actual break duration is the same as the previous optimized accumulated duration for all regular channels. The method 400 can then optionally proceed to step 406. If not, the method can then proceed to step 408. That is, in various embodiment of the present invention, an acceptable break interval duration range is desired to enable a much easier determination of a synchronized breakpoint, and as such, the method 400 can proceed to step 406. However, if no such range is desired, the method can proceed to step 408.

At optional step 406, an acceptable break interval duration range is determined according to equation three (3), which follows:

$$\text{<break interval minimum> - <previous break-in channel content duration> to <break}$$
$$\text{interval maximum> - <previous break-in channel content duration>} \qquad (3)$$

The method 400 then proceeds to step 408.

At step 408, content portions for the individual channels are compiled to attempt to have the endpoints of the playlists of the individual channels end at the endpoint of the previously determined ideal duration interval for the individual channels. That is, respective content portions of the individual channels are compiled to attempt to cause the respective playlists of the individual channels to equal the ideal duration interval for the individual channels. Optionally and with respect to step 406, all the compiled playlists of the individual channels are searched for all individual channels which will make the accumulated duration within the acceptable break interval duration range. The method then proceeds to step 410.

At step 410, a breakpoint is selected from at least one of an endpoint of the ideal duration interval and an endpoint of the playlist of an individual channel, whichever results in a least amount of filler content required to synchronize the respective endpoints of the individual channels to the selected breakpoint. The method 400 can then be exited.

In one embodiment of the present invention, the following process can be used to select the best duration as an optimized duration from the channel durations, which include the ideal break duration.

That is, initially an amount of filler content for each individual channel is determined for a respective individual channel duration. In a first scenario, if a channel duration is on a media boundary (e.g., a determined transition point between individual and common channel content), the filler duration will be 0. If the channel duration falls in the middle of individual channel media content, the media content will be pushed off for a next play. The difference from the end of a last complete individual channel media content to the determined channel duration will be the filler duration. Subsequently, the determined channel duration requiring the shortest amount of filler content is selected as the optimized accumulated channel duration of step 320 of the method 300 of FIG. 3.

In one embodiment of the present invention, in case in which the amount of filler content is the same for more than one individual channel, an optimized accumulated channel duration can be selected by selecting one of the individual channel durations having the shortest amount of filler content that is also at least an individual channel duration closest to the ideal break duration or an individual channel duration having a smaller duration value.

FIG. 5 depicts tables of individual channel playlist and break-in channel playlist definitions for describing an example of a method for determining an optimal break point for the transition from respective individual channels to a break-in channel in accordance with an embodiment of the present invention. In FIG. 5, break-in channel and filler media rules are also depicted (i.e., predetermined break-in channel frequency and filler medial length). For example, the example of FIG. 5 defines a Break-in frequency of four breaks per hour, a Break-in interval minimum of fourteen minutes, a Break-in interval maximum of sixteen minutes, a Filler minimum length of ten seconds and a Filler maximum length of one minute.

As further depicted in the example of FIG. 5, a first break-in channel block comprises three media content clips including H_Media1 having a duration of 2:00 minutes, H_Media2 having a duration of 2:00 minutes and H-Media3 having a duration of 2:00 minutes. A second break-in channel block of FIG. 5 comprises three media content clips including H_Media4 having a duration of 1:00 minute, H_Media5 having a duration of 2:00 minutes and H-Media6 having a duration of 2:00 minutes. FIG. 5 further depicts a first individual channel comprising sixteen media clips of various lengths and a second individual channel also comprising sixteen media clips of various lengths.

In the example of FIG. 5, it is assumed that at wall clock time of 0:00, the first block of the break-in channel is played first, so Break 1 is obvious.

**Play 1 and Break 2**

Since in the example of FIG. 5 the break-in channel is played every 15 minutes based on the Break Frequency setting of four per hour, the **Play 1** duration for individual channel content should ideally equal 9 minutes [break interval duration (15 minutes) - Break in content 1 duration (6 minutes)] as indicated in equation 1, above. Based on the Break-in Interval minimum/maximum setting (14 minutes/16 minutes) and the break in content 1 duration of 6 minutes in FIG. 5, **Play 1** duration for individual channel content can range from 8 minutes to 10 minutes (14 minutes - 6 minutes) to (16 minutes - 6 minutes). For this accumulated duration range, a possible media boundary for CH1 occurs at the end of media 3 at a time of 10 minutes. For CH2, the accumulated duration range occurs at the end of media 3 at 9:45. As such, for the media second boundary there are a total of three possible breakpoints; 9:00 (ideal break point), 9:45 (channel two break point), and 10:00 (channel one break point).

At the first break point of 9:00 (ideal), CH1 will play media 1 and 2 and need filler with a length of 2:00. CH2 will play media 1 and 2, and need filler with a length of 3:00. As indicated by the numbers above, CH1 and CH2 will break the filler maximum rule and thus may not be the best option.

At the second break point of 9:45, CH1 will play media 1 and 2, and need filler with a length of 2:45. CH2 will play media 1, 2 and 3, require no filler. As indicated by the numbers for the second possible media break point, CH1 will break the filler maximum rule.

At the third break point of 10:00, CH1 will play media 1, 2, and 3 and require no filler. CH2 will play media 1, 2 and 3, and require filler with a length of 0:15. As indicated by the numbers for the third break point, neither CH1 nor CH2 break any filler minimum/maximum rules or any other rules and in this case is the best choice for a determined optimized accumulated channel duration for **Play 1** is determined as a point in time of 10 minutes and a point in time of 16 minutes [break in channel content (6 minutes) + optimized accumulated channel duration (10 minutes)] is considered the media boundary for **Break 2.**

**Play 2 and Break 3**

When calculating Play 1 and Break 2, Play 1 ideally should have had a duration of 9 minutes to have Break 2 fall at an ideal position in time of 15:00 minutes because the break in channel should ideally play every 15 minutes, however, Play 1 actually had a duration of 10 minutes. Keeping this in mind and that the break in channel content length for the next block is 5 minutes, an ideal duration for Play 2 should be 9 minutes and is determined according to equation 2 as presented above and as follows:

$$(15:00 - 5:00) - (10:00 - 9:00) = 9:00 \text{ minutes.}$$

Based on the Break in Interval minimum/maximum setting (14 minutes/16 minutes) of FIG. 5, **Play 2** duration for individual channel content can range from 9 minutes to 11 minutes (14 minutes - 5 minutes) to (16 minutes - 5 minutes). In this accumulated duration range keeping in mind the individual channel content duration range rule, there is no possible media boundary solution for CH1 or CH2 other than at the ideal breakpoint of 9:00. More specifically, for CH1, playing only media 4 and 5 will result in an individual channel content duration of 5:30 and playing media 4, 5, 6 and 7 will result in an individual channel content duration of 11:30, which both exceed the individual channel content duration range. Similarly, for CH2, playing only media 4 and 5 will result in an individual channel content duration of 6:00 and playing media 4, 5, 6 and 7 will result in an individual channel content duration of 11:30, which both exceed the individual channel content duration range.

For the ideal break point of 9:00, CH1 will play media 4, 5 and 6 and need filler with a length of 0:30. CH2 will play media 4, 5 and 6, and also need filler with a length of 0:30.

As such, for Play 2, the time of 9:00 minutes is considered as the optimized accumulated channel duration, and after that 9:00 minutes at a point in time of 30 minutes [break in channel content (5 minutes) + optimized accumulated channel duration (9 minutes) + point in time of previous media boundary (16 minutes)] is considered the media boundary for **Break 3.**

It should be noted that although as described above, the ideal channel content duration of 9:00 minutes, being the only possible solution, happens to fit the Break Filler minimum/ maximum rule, in other situations, there may exist no choice in the acceptable Break Interval range that complies with the Break Filler rule. In this case, in one embodiment of the present invention, the Break Interval maximum boundary can be ignored to search for the next available media boundary. For example, if in the example above the Break Filler Maximum setting was 29 seconds instead of 1 minute, breaking at 9:00 would not comply with the Break Filler rule. In one solution, the next media boundary for CH1 would be selected, which is end of media 7 at 11:30, and the next media boundary for CH2 would be selected, which is end of media 7 at 11:30. As such, no filler would be needed, which complies with the Break Filler rule. In such a case, a point in time after the 11:30 minute point in time would be considered the breakpoint for **Break 3.**

**Play 3 and Break 4**

When calculating Play 2 and Break 3, Play 2 ideally should have had a duration of 9 minutes to have Break 3 fall at an ideal position in time of 30:00 minutes because the break in channel should ideally play every 15 minutes, and, Play 2 did in fact have a duration of 9 minutes. Keeping this in mind and that the break in channel content length for the next block is 6 minutes, an ideal duration for Play 3 should be 9 minutes and is determined according to equation 2 as presented above and as follows:

$$(15:00 - 6:00) - (9:00 - 9:00) = 9:00 \text{ minutes.}$$

Based on the Break in Interval minimum/maximum setting (14 minutes/16 minutes) of FIG. 5, **Play 3** duration for individual channel content can range from 8 minutes to 10 minutes (14 minutes - 6 minutes) to (16 minutes - 6 minutes). In this accumulated duration range keeping in mind the individual channel content duration range rule, there is no media boundary possible for CH1, however, for CH2, the possible media boundary occurs at the end of media 9 at 8:30. More specifically, for CH1, playing media 7 and 8 will result in an individual channel content duration of 7:30 and playing media 7, 8 and 9 will result in an individual channel content duration of 10:30, which both exceed the individual channel content duration range. However, for CH2, playing media 7, 8 and 9 will result in an individual channel content duration of 8:30, which is within the individual channel content duration range.

For the break point of 8:30, CH1 will play media 7 and 8, and require 1:00 minute of filler and CH2 will play media 7, 8 and 9, and require no filler.

For the ideal break point of 9:00, CH1 will play media 7 and 8, and require 1:30 minutes of filler. CH2 will play media 7, 8 and 9 and require 0:30 of filler. For the ideal break point of 9:00, CH1 will break the filler maximum rule.

As such, for Play 3, the time of 8:30 minutes is considered as the optimized accumulated channel duration, and after that 8:30 minutes at a point in time of 44:30 minutes [break in channel content (6 minutes) + optimized accumulated channel duration (8:30 minutes) + point in time of previous media boundary (30 minutes)] is considered the media boundary for **Break 4.**

Having described various embodiments for a method and system for playlist based synchronized breakpoint calculation (which are intended to be illustrative and not limiting), it is noted that modifications and variations can be made by persons skilled in the art in light of the above teachings. It is therefore to be understood that changes may be made in the particular embodiments of the invention disclosed which are within the scope of the invention as outlined by the appended claims. While the forgoing is directed to various embodiments of the present invention, other and further embodiments of the invention may be devised without departing from the scope thereof.

**Claims**

1. A method for determining a synchronized breakpoint for playlists, comprising:

     determining a break interval duration using a defined break frequency;
     determining, using the determined break interval duration and break in content to be presented during the break interval duration, an ideal duration interval for content of a plurality of separate channels to be presented;
     compiling respective content portions of the plurality of separate channels to cause the respective playlists of the plurality of separate channels to attempt to equal the ideal duration interval; and
     selecting as a breakpoint for the respective playlists of the plurality of separate channels, at least one of an endpoint of the ideal duration interval and an endpoint of the playlist of one of the plurality of separate channels, whichever results in a least amount of filler content required to synchronize the respective endpoints of the plurality of separate channels to the selected breakpoint.

2. The method of claim 1, further comprising for a subsequent break interval duration, adjusting an ideal duration interval for content of at least one of the plurality of separate channels to be presented by an amount equal to a difference between an endpoint of the previously determined ideal duration interval and the selected breakpoint, if any.

3. The method of claim 1, wherein said breakpoint is equal to the endpoint of a playlist compilation of at least one of the plurality of separate channels.

4. The method of claim 1, wherein said content portions comprise media clips.

5. The method of claim 4, wherein said media clips comprise advertising media content.

6. The method of claim 1, wherein the endpoint of a playlist compilation of at least one of the plurality of separate channels closest to said ideal duration interval is selected as said breakpoint.

7. The method of claim 1, further comprising at least one of a minimum and maximum value for said break interval duration.

8. The method of claim 1, further comprising at least one of a minimum and maximum value for said filler content.

9. The method of claim 1, wherein if more than one of the plurality of separate channels results in a least amount of filler content required to synchronize the respective endpoints of the plurality of separate channels to the selected breakpoint, the breakpoint can be selected as the endpoint of the playlist closest to the ideal duration interval or at least one of the plurality of separate channels having a smaller duration value.

10. The method of claim 1, further comprising adding filler content to the respective playlists of the plurality of separate channels to cause the respective playlists of the plurality of separate channels to end at the selected breakpoint.

11. A system for determining a synchronized breakpoint for playlists, comprising:

     at least one content source for providing content for a plurality of separate channels, filler content and at least one break-in channel content; and
     a controller including a memory for storing at least information regarding the content for the plurality of separate channels, filler content, break-in channel content and program instructions, and a processor for executing said program instructions, the controller adapted to perform the steps of;

          determining a break interval duration using a defined break frequency;
          determining, using the determined break interval duration and break in content to be presented during the break interval duration, an ideal duration interval for content of a plurality of separate channels to be presented;
          compiling respective content portions of the plurality of separate channels to cause the respective playlists of the plurality of separate channels to attempt to equal the ideal duration interval; and
          selecting as a breakpoint for the respective playlists of the plurality of separate channels, at least one of an endpoint of the ideal duration interval and an endpoint of the playlist of one of the plurality of separate channels, whichever results in a least amount of filler content required to synchronize the respective endpoints of the a plurality of separate channels to the selected breakpoint.

12. The system of claim 11, wherein said at least one content source comprises at least one of an advertiser, a recording company and a movie studio.

13. The system of claim 11, wherein said controller comprises a server of at least one of a network management center, a network operations center and a content distribution network.

14. The system of claim 11, wherein at least one of said plurality of separate channels comprises a retail advertising channel.

15. The system of claim 11, wherein at least one of said filler content, the respective content portions of said plurality of separate channels and said break in content comprises retail advertising media.

**Patentansprüche**

1. Verfahren zum Bestimmen eines synchronisierten Unterbrechungspunkts für Wiedergabelisten, wobei das Verfahren umfasst:

   Bestimmen einer Unterbrechungsintervalldauer unter Verwendung einer definierten Unterbrechungsfrequenz;
   Bestimmen eines idealen Dauerintervalls für den Inhalt mehrerer getrennter darzustellender Kanäle unter Verwendung der bestimmten Unterbrechungsintervalldauer und des während der Unterbrechungsintervalldauer darzustellenden Unterbrechungsinhalts;
   Zusammenstellen jeweiliger Inhaltsabschnitte der mehreren getrennten Kanäle, um zu veranlassen, dass sich die jeweiligen Wiedergabelisten der mehreren getrennten Kanäle an das ideale Dauerintervall anzugleichen versuchen; und
   Auswählen eines Endpunkts eines idealen Dauerintervalls und/oder eines Endpunkts der Wiedergabeliste eines der mehreren getrennten Kanäle, je nachdem, was zu einer kleinsten Mange an Füllinhalt führt, der zum Synchronisieren der jeweiligen Endpunkte der mehreren getrennten Kanäle mit dem ausgewählten Unterbrechungspunkt erforderlich ist, als einen Unterbrechungspunkt für die jeweiligen Wiedergabelisten der mehreren getrennten Kanäle.

2. Verfahren nach Anspruch 1, das ferner das Einstellen eines idealen Dauerintervalls für Inhalt mindestens eines der mehreren getrennten darzustellenden Kanäle um einen Betrag, der gleich einer Differenz zwischen einem Endpunkt des zuvor bestimmten idealen Dauerintervalls und dem ausgewählten Unterbrechungspunkt, wenn überhaupt, ist, für eine nachfolgende Unterbrechungsintervalldauer umfasst.

3. Verfahren nach Anspruch 1, wobei der Unterbrechungspunkt gleich dem Endpunkt einer Wiedergabelistenzusammenstellung mindest eines der mehreren getrennten Kanäle ist.

4. Verfahren nach Anspruch 1, wobei die Inhaltsabschnitte Medien-Clips umfassen.

5. Verfahren nach Anspruch 4, wobei die Medien-Clips Werbemedieninhalt umfassen.

6. Verfahren nach Anspruch 1, wobei der Endpunkt einer Wiedergabelistenzusammenstellung mindestens eines der mehreren getrennten Kanäle, der dem idealen Dauerintervall am nächsten ist, als der Unterbrechungspunkt ausgewählt wird.

7. Verfahren nach Anspruch 1, das ferner einen Minimalwert und/oder einen Maximalwert für die Unterbrechungsintervalldauer umfasst.

8. Verfahren nach Anspruch 1, das ferner einen Minimalwert und/oder einen Maximalwert für den Füllinhalt umfasst.

9. Verfahren nach Anspruch 1, wobei der Unterbrechungspunkt als derjenige Endpunkt der Wiedergabeliste, der dem idealen Dauerintervall am nächsten ist, oder mindestens als einer der mehreren getrennten Kanäle mit einem kleineren Dauerwert ausgewählt werden kann, falls mehr als einer der mehreren getrennten Kanäle zu einer kleinsten Menge an Füllinhalt führen, der erforderlich ist, um die jeweiligen Endpunkte der mehreren getrennten Kanäle mit dem ausgewählten Unterbrechungspunkt zu synchronisieren.

**10.** Verfahren nach Anspruch 1, das ferner das Hinzufügen von Füllinhalt zu den jeweiligen Wiedergabelisten der mehreren getrennten Kanäle, um zu veranlassen, dass die jeweiligen Wiedergabelisten der mehreren getrennten Kanäle bei dem ausgewählten Unterbrechungspunkt enden, umfasst.

**11.** System zum Bestimmen eines synchronisierten Unterbrechungspunkts für Wiedergabelisten, wobei das System umfasst:

mindestens eine Inhaltsquelle zum Bereitstellen von Inhalt für mehrere getrennte Kanäle, von Füllinhalt und von mindestens einem Unterbrechungskanalinhalt; und

einen Controller, der einen Speicher zum Speichern mindestens von Informationen hinsichtlich des Inhalts für die mehreren getrennten Kanäle, von Füllinhalt, von Unterbrechungskanalinhalt und von Programmanweisungen und

einen Prozessor zum Ausführen der Programmanweisungen enthält, wobei der Controller dafür ausgelegt ist, die folgenden Schritte auszuführen:

Bestimmen einer Unterbrechungsintervalldauer unter Verwendung einer definierten Unterbrechungsfrequenz;

Bestimmen eines idealen Dauerintervalls für den Inhalt mehrerer getrennter darzustellender Kanäle unter Verwendung der bestimmten Unterbrechungsintervalldauer und des während der Unterbrechungsintervalldauer darzustellenden Unterbrechungsinhalts;

Zusammenstellen jeweiliger Inhaltsabschnitte der mehreren getrennten Kanäle, um zu veranlassen, dass sich die jeweiligen Wiedergabelisten der mehreren getrennten Kanäle an das ideale Dauerintervall anzugleichen versuchen; und

Auswählen eines Endpunkts eines idealen Dauerintervalls und/oder eines Endpunkts der Wiedergabeliste eines der mehreren getrennten Kanäle, je nachdem, was zu einer kleinsten Menge an Füllinhalt führt, der zum Synchronisieren der jeweiligen Endpunkte der mehreren getrennten Kanäle mit dem ausgewählten Unterbrechungspunkt erforderlich ist, als einen Unterbrechungspunkt für die jeweiligen Wiedergabelisten der mehreren getrennten Kanäle.

**12.** System nach Anspruch 11, wobei die mindestens eine Inhaltsquelle einen Werbungstreibenden und/oder ein Aufzeichnungsunternehmen und/oder ein Filmstudio umfasst.

**13.** System nach Anspruch 11, wobei der Controller einen Server einer Netzmanagementzentrale und/oder einer Netzbetriebszentrale und/oder eines Inhaltsverteilungsnetzes umfasst.

**14.** System nach Anspruch 11, wobei mindestens einer der mehreren getrennten Kanäle einen Einzelhandelswerbungskanal umfasst.

**15.** System nach Anspruch 11, wobei der Füllinhalt und/oder die jeweiligen Werbeabschnitte der mehreren getrennten Kanäle und/oder der Unterbrechungsinhalt Einzelhandelswerbungsmedien umfassen.

**Revendications**

**1.** Procédé pour déterminer un point d'arrêt synchronisé pour des listes de lecture, comprenant :

la détermination de la durée d'un intervalle de repos à l'aide d'une fréquence de repos définie ;

la détermination d'un intervalle de durée idéale pour le contenu d'une pluralité de canaux séparés à présenter à l'aide de la durée de l'intervalle de repos déterminée et du contenu de repos à présenter pendant la durée de l'intervalle de repos ;

la compilation de parties de contenu respectives de la pluralité de canaux séparés pour que les listes de lecture respectives de la pluralité de canaux séparés soient égales à l'intervalle de durée idéale ; et

la sélection comme point d'arrêt d'au moins un point final de l'intervalle de durée idéale et un point final de la liste de lecture de l'un des canaux séparés pour les listes de lecture respectives de la pluralité de canaux séparés, en sélectionnant celui qui présente la plus faible quantité de contenu de remplissage nécessaire pour synchroniser les points finaux respectifs de la pluralité de canaux séparés avec le point d'arrêt sélectionné.

**2.** Procédé selon la revendication 1, comprenant en outre une durée d'intervalle de repos subséquente, ajustant un intervalle de durée idéale pour le contenu d'au moins l'un des canaux séparés à présenter à l'aide d'une quantité égale à la différence entre un point final de l'intervalle de durée idéale précédemment déterminé et le point d'arrêt sélectionné, le cas échéant.

**3.** Procédé selon la revendication 1, dans lequel ledit point d'arrêt est égal au point final d'une compilation de liste de lecture d'au moins l'un des canaux séparés.

**4.** Procédé selon la revendication 1, dans lequel lesdites parties de contenu comprennent des séquences multimédia.

**5.** Procédé selon la revendication 4, dans lequel lesdites séquences multimédia comprennent du contenu multimédia publicitaire.

**6.** Procédé selon la revendication 1, dans lequel le point final d'une compilation de liste de lecture d'au moins l'un des canaux séparés les plus proches de l'intervalle de durée idéale est sélectionné comme ledit point d'arrêt.

**7.** Procédé selon la revendication 1, comprenant en outre au moins une valeur minimale et une valeur maximale pour ladite durée d'intervalle de repos.

**8.** Procédé selon la revendication 1, comprenant en outre au moins une valeur minimale et une valeur maximale pour ledit contenu de remplissage.

**9.** Procédé selon la revendication 1, dans lequel si plusieurs des canaux séparés représentent une plus faible quantité de contenu de remplissage nécessaire pour synchroniser les points finaux respectifs de la pluralité de canaux séparés avec le point d'arrêt sélectionné, le point d'arrêt peut être sélectionné comme point final de la liste de lecture la plus proche de l'intervalle de durée idéale ou au moins l'un des canaux séparés ayant une durée inférieure.

**10.** Procédé selon la revendication 1, comprenant en outre l'ajout de contenu de remplissage aux listes de lecture respectives de la pluralité de canaux séparés afin que les listes de lecture respectives de la pluralité de canaux séparés se terminent au point d'arrêt sélectionné.

**11.** Système pour déterminer un point d'arrêt synchronisé pour des listes de lecture, comprenant :

au moins une source de contenu fournissant du contenu à une pluralité de canaux séparés, du contenu de remplissage et au moins un contenu de canal de repos ; et
un contrôleur comprenant une mémoire pour stocker au moins les informations concernant le contenu de la pluralité de canaux séparés, le contenu de remplissage, le contenu du canal de repos et les instructions du programme, et un processeur pour exécuter lesdites instructions du programme, le contrôleur étant adapté pour réaliser les étapes ;

la détermination de la durée d'un intervalle de repos à l'aide d'une fréquence de repos définie ;
la détermination d'un intervalle de durée idéale pour le contenu d'une pluralité de canaux séparés à présenter à l'aide de la durée de l'intervalle de repos déterminée et du contenu de repos à présenter pendant la durée de l'intervalle de repos ;
la compilation de parties de contenu respectives de la pluralité de canaux séparés pour que les listes de lecture respectives de la pluralité de canaux séparés soient égales à l'intervalle de durée idéale ; et
la sélection comme point d'arrêt d'au moins un point final de l'intervalle de durée idéale et un point final de la liste de lecture de l'un des canaux séparés pour les listes de lecture respectives de la pluralité de canaux séparés, en sélectionnant celui qui présente la plus faible quantité de contenu de remplissage nécessaire pour synchroniser les points finaux respectifs de la pluralité de canaux séparés avec le point d'arrêt sélectionné.

**12.** Système selon la revendication 11, dans lequel au moins une source de contenu comprend au moins un annonceur, une société d'enregistrement et un studio d'enregistrement.

**13.** Système selon la revendication 11, dans lequel ledit contrôleur comprend un serveur comprenant au moins un centre de gestion du réseau, un centre des opérations du réseau et un réseau de distribution du contenu.

**14.** Système selon la revendication 11, dans lequel au moins l'un des canaux séparés comprend un canal publicitaire de détaillants.

**15.** Système selon la revendication 11, dans lequel au moins un des contenus parmi ledit contenu de remplissage, parties de contenu respectives de ladite pluralité de canaux séparés et ledit contenu de repos comprend du contenu multimédia publicitaire.

**FIG. 1**

FIG. 2

—300

```
┌─────────────────────────────────┐
│ A first Break-in channel content is    │  —310
│ initially played across all channels.   │
└─────────────────────────────────┘
                    │
                    ▼
┌─────────────────────────────────┐
│ Each individual channel plays its own  │  —320
│ content for a determined, optimized   │
│ accumulated channel duration.      │
└─────────────────────────────────┘
                    │
                    ▼
┌─────────────────────────────────┐
│ Break-in channel content is again    │  —330
│ played.                 │
└─────────────────────────────────┘
                    │
                    ▼
          ┌──────────────┐
          │    Exit    │
          └──────────────┘
```

FIG. 3

~400

A break interval duration is determined. ~402

An individual channel ideal duration interval is determined. ~404

Optionally

An acceptable break interval duration range is determined. ~406

Respective content portions of the individual channels are compiled to cause the respective playlists of the individual channels to attempt to equal the ideal duration interval. ~408

Selecting a breakpoint for the individual channels, at least one of an endpoint of the ideal duration interval and an endpoint of the playlist of an individual channel, whichever results in a least amount of filler content required to synchronize the respective endpoints of the individual channels to the selected breakpoint. ~410

Exit

FIG. 4

1. Break-in frequency:          4 breaks per hour
2. Break-in interval minimum:    14 minutes
3. Break-in interval maximum:    16 minutes
4. Filler minimum length:        10 seconds
5. Filler maximum length:       1 minute

| Headline Channel | Media Duration | Accumulated Duration |
|---|---|---|
| Block1 | | |
| H_Media1 | 2:00 | 2:00 |
| H_Media2 | 2:00 | 4:00 |
| H_Media3 | 2:00 | 6:00 |
| Block2 | | |
| H_Media4 | 1:00 | 1:00 |
| H_Media5 | 2:00 | 3:00 |
| H_Media6 | 2:00 | 5:00 |

## FIG. 5A

| CH1 Channel | Media Duration | Accumulated Duration | CH2 Channel | Media Duration | Accumulated Duration |
|---|---|---|---|---|---|
| CH1_Media1 | 3:00 | | CH2_Media1 | 3:00 | |
| CH1_Media2 | 4:00 | | CH2_Media2 | 3:00 | |
| CH1_Media3 | 3:00 | | CH2_Media3 | 3:45 | |
| CH1_Media4 | 3:00 | | CH2_Media4 | 3:00 | |
| CH1_Media5 | 2:30 | | CH2_Media5 | 3:00 | |
| CH1_Media6 | 3:00 | | CH2_Media6 | 2:30 | |
| CH1_Media7 | 3:00 | | CH2_Media7 | 3:00 | |
| CH1_Media8 | 4:30 | | CH2_Media8 | 3:00 | |
| CH1_Media9 | 3:00 | | CH2_Media9 | 2:30 | |
| CH1_Media10 | 4:00 | | CH2_Media10 | 3:00 | |
| CH1_Media11 | 3:00 | | CH2_Media11 | 3:00 | |
| CH1_Media12 | 3:00 | | CH2_Media12 | 3:45 | |
| CH1_Media13 | 2:30 | | CH2_Media13 | 3:00 | |
| CH1_Media14 | 3:00 | | CH2_Media14 | 3:00 | |
| CH1_Media15 | 2:30 | | CH2_Media15 | 2:30 | |
| CH1_Media16 | 3:00 | | CH2_Media16 | 2:30 | |

FIG. 5B

EP 2 225 885 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007022602 W
- WO 2008097284 A
- US 2007022617 W
- WO 2008097290 A